# EUROPEAN PATENT APPLICATION

(11) **EP 3 581 343 A1**
(43) Date of publication of application: **18.12.2019**
(21) Application number: 19179740.6
(22) Date of filing: 12.06.2019
(51) Int. Cl.: B25J 9/16, G05B 19/05

(54) **A SAFETY CONTROL SYSTEM FOR AN INDUSTRIAL ROBOT AND THE INDUSTRIAL ROBOT**

(30) Priority: 14.06.2018 CN 201820926737 U
(71) Applicant: Siemens Aktiengesellschaft, 80333 München (DE)
(72) Inventor: LO, George, Langhorne, PA Pennsylvania 19047 (US); WU, Jian Qiang, Shanghai, 200010 (CN); YI, Xing, Shanghai, 200082 (CN); ZHUO, Yue, Beijing, 100084 (CN)
(74) Representative: Isarpatent

(57) **Abstract**

The present invention provides a safety control system for an industrial robot and the industrial robot, wherein the safety control system comprises a first safety controller (7), which is connected to at least one core safety sensor (31) outputting a core safety signal and receives said core safety signal, and a second safety controller (52), which is connected to at least one safety-related sensor (32) outputting a safety-related signal and receives said safety-related signal, wherein said first safety controller (7) and said second safety controller (52) are respectively connected to a safety actuating system (9).

## Description

### Technical Field

The present invention relates to a safety control system for an industrial robot and the industrial robot equipped with the safety control system.

### Background Art

A robot system, for example, an industrial robot system, usually comprises a control unit and robot units performing various operations under the control of the control unit. Robot units can include actuators such as robot manipulator performing operations, drivers used to drive robot manipulators, and a power supply used to supply power. The control unit can generate control commands used to control robot units.

To protect the safety of other equipment and personnel working in the environment of an industrial robot system, specific safety functions are required of the industrial robot system. For example, detailed provisions on the safety functions required for industrial robots and the reliability of safety functions are made in the international standard ISO 10218-1 and the Chinese national standard GB 11291.1.

To meet the safety requirements, two solutions are usually adopted for the industrial robot systems in the prior art. One solution is that the robot systems are equipped with a system controller fulfilling the functional safety to satisfy all functions required for safety so as to provide reliable safety control for operators. However, the solution will increase the cost of the robot systems. Another solution is that the robot systems are equipped with a specific logic circuit to reduce the cost. However, because of the limited operational capability of such an application specific integrated circuit (ASIC), the solution can provide only basic safety functions and is difficult to apply to different industrial robot systems.

### Summary of the Invention

One object of the present invention is to provide a safety control system for an industrial robot, wherein the safety control system comprises a first safety controller, which is connected to at least one core safety sensor outputting a core safety signal and receives said core safety signal, and a second safety controller, which is connected to at least one safety-related sensor outputting a safety-related signal and receives said safety-related signal, wherein said first safety controller and said second safety controller are respectively connected to a safety actuating system. According to the present invention, the first safety controller is usually a main controller and can meet the safety standard for PL=d, category III in ISO13849-1 or SIL2 in IEC62061, and the second safety controller is an auxiliary controller. Through such a design, the cost of realizing the safety functions is lower than that of an automatic malfunction controller. This solution can provide redundant functions and can be flexibly applied to different types of industrial robot control systems. In addition, this solution can lower the cost of a robot system in safety licensing.

According to the present invention, said core safety sensor and safety-related sensor are both customized by the user according to their working environments or the working environment and condition of the robot. Accordingly, core safety signals and safety-related signals are also customized. The signals of the safety-related sensor can be, for example, the braking state of a brake, error reporting monitoring signal of servo driver, ZSP monitoring signal, and key switch of the demonstrator. The core safety sensor can usually include, for example, the enable switch of the demonstrator, emergency stop button inside or outside the demonstrator or safety cage, and door switch of the safety cage. In the present invention, a signal refers to information in any form and/or an input/output into/from a controller. The sensor in the present invention refers to any equipment that can sense actions or changes, and it can be, for example, a sensor or sensor element in a narrow sense, such as photosensor, infrared sensor, position sensor, and speed sensor, and it can also be a switch component or a component which can sense a door switch.

According to a preferable embodiment, said first safety controller is a safety relay. The safety relay is a programmable device and can be applied to different industrial robots by changing the program. Said safety controller has passed a plurality of safety authentications, and no safety authentication is additionally required for the safety controller here.

According to a preferable embodiment, each of said core safety sensors comprises two identical sensor elements and is connected to said first safety controller through two channels. Such a design realizes redundant control specially for the functions related to the safety core.

According to a preferable embodiment, said first safety controller is connected to at least one said safety-related sensor and receives said safety-related signal. In this way, the first safety controller can also make a determination on the safety-related signal, and will take the corresponding control action when the safety-related signal is considered as a core safety signal.

According to a preferable embodiment, said first safety controller communicates with said second safety controller. Hence, the first safety controller and the second safety controller can mutually transmit information and signals for cross checks.

According to a preferable embodiment, said safety actuating system comprises a first safety actuating device, wherein said first safety controller and said second safety controller are respectively connected to said first safety actuating device for communication.

According to a preferable embodiment, said safety actuating system comprises a second safety actuating device and/or a third safety actuating device, wherein said first safety controller is connected to the second safety actuating device and/or the third safety actuating device for communication.

According to the customization, the first safety controller can be connected to the actuators performing core safety actuations to control the actuators. When these actuators additionally provide moderate actuations, they can be controlled by the second safety controller. In this way, the wear-out caused by a core safety actuation, for example, emergency stop, can be reduced.

According to a preferable embodiment, said second safety controller is a part of a robot controller. Thus, the robot controller can effectively be utilized to realize redundant safety control.

Another object of the present invention is to provide a robot system, which is characterized in that said robot system comprises the safety control system described in any of the embodiments above.

### Brief Description of the Drawing

The following drawing only aims at giving an illustrative description and explanation of the present invention, but not limiting the scope of the present invention. In the drawing,

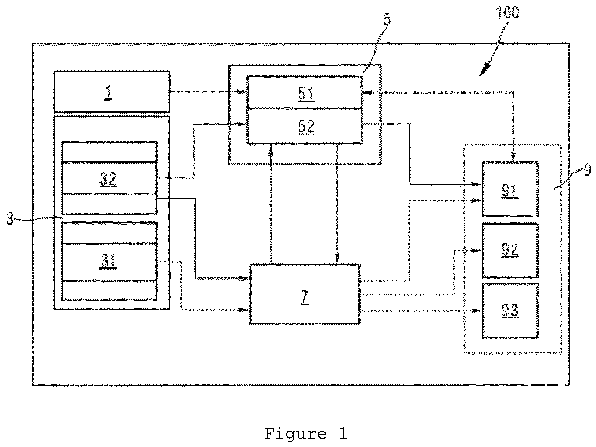

Fig. 1 is a schematic diagram for the safety control system for an industrial robot according to the present invention.

### Detailed Description of the Invention

To understand more clearly the technical characteristics, objects, and effects of the present invention, the following describes the embodiments of the present invention in combination with the drawing.

Fig. 1 is a schematic diagram for the safety control system for an industrial robot according to the present invention. To realize safety control, the safety control system 100 comprises a main safety controller 7 and an auxiliary safety controller 52. Wherein the main safety controller 7 is a technically mature safety controller or safety relay and at least meets the safety standard for PL=d, category III in ISO13849-1 or SIL2 in IEC62061. The auxiliary safety controller 52 can be a part of a robot controller 5, and the robot controller 5 can comprise a robot control unit 51 controlling a robot, and an auxiliary safety controller 52.

In an industrial robot system, the user can classify the signals generated by the equipment in the robot system into the following types of signals relative to the safety control system 100 according to his or her own safety assessment:
Safety-irrelevant signal;
Safety-related signal;
Core safety signal.

Accordingly, the sensors generating these signals are classified into safety-irrelevant sensors 1, safety-related sensors 32 and core safety sensors 31.

In this case, the signal input into a safety-irrelevant sensor 1 can be, for example, a signal for controlling the conventional motion of an industrial robot. The signal input into a safety-related sensor 2 can be, for example, the braking state of a brake, error reporting monitoring signal of servo driver, ZSP monitoring signal, and key switch of the demonstrator. The signal input into a core safety sensor can usually include, for example, the signal of the enable switch of the demonstrator, emergency stop signal inside or outside the demonstrator or safety cage, and door switch signal of the safety cage. In the present invention, a signal refers to information in any form and/or an input into a controller.

According to the present invention, all core safety sensors 31, for example, emergency stop button, safety cage, interlocking gear and press switch, are directly connected to the main safety controller 7 and transmit core safety signals to the main safety controller 7. The main safety controller 7 can transmit these core safety signals to the auxiliary safety controller 52. The main safety controller 7 is also connected to various actuating devices of the safety actuating system 9 and controls the actions of the actuating devices of said safety actuating system 9 to realize safety operations.

Other safety-related signals, such as key switch of a robot and error reporting signal of servo driver, can be connected to the main safety controller 7 and/or the auxiliary safety controller 52 as required.

Safety-irrelevant signals are usually directly input into the robot controller 51, which is usually used to help execute motion instructions of the robot.

In the embodiment of the present invention shown in Fig. 1, the safety control system 100 for an industrial robot comprises a main safety controller 7 and an auxiliary safety controller 52. The auxiliary safety controller 52 is a part of the robot controller 5. The main safety controller 7 and the auxiliary safety controller 52 communicate with each other through a digital I/O interface.

The main safety controller 7 is connected to the safety actuating system 9 for communication through a digital I/O interface. The safety actuating system 9 can comprise a servo driver 91, a main power supply 92 and a brake-holding power supply 93. As shown in Fig. 1, the main safety controller 7 can be connected to, communicate with and control all safety-related equipment, for example, servo driver 91, main power supply 92 and brake-holding power supply 93.

The auxiliary safety controller 52 is connected to and controls the equipment related to the safety-related functions and motion control functions in the safety actuating system. For example, the auxiliary safety controller communicates with and controls the servo driver 91 through a communication protocol (for example, PROFINET) or in another digital output mode.

The main safety controller 7 can receive core safety signals and/or safety-related signals according to the arrangement of the operator or designer. For all equipment 31 which can generate core safety signals, a pair of (namely, two) identical sensor elements are arranged at a point where core safety signals are generated to simultaneously generate two signals at the safety point and the pair of signals are transmitted to the main safety controller 7 through two channels. The main safety controller 7 analyzes the pair of core safety signals. When either of the pair of core safety signals indicates that the robot is in the normal working state, the main safety controller 7 will not send out any safety control signal.

According to the present invention, all core safety actuators are equipped with two independent execution channels. For example, two AC contacts in series are provided for the safety torque off (STO) function, the main power supply off function and the power supply off function, while two contact relays are provided for the holding brake control function. However, the function of outputting safety-related signals and the motion control function are performed by the auxiliary safety controller 52 through a communication protocol, for example, PROFINET or in digital output mode.

The safety processes which the main safety controller 7 is responsible for should meet the requirements for PL=d or SIL2. The secondary safety processes which the auxiliary safety controller 52 is responsible for must not bring about any danger in an unconventional working mode of the robot system. For example, an action which the auxiliary safety controller 52 can take is to reduce the speed of the motor to zero before the main safety controller 7 brakes.

The following particularly describes the cooperation between the main safety controller 7 and the auxiliary safety controller 52.

For example, when a safety-related sensor 32 (for example, a sensor of a servo driver) sends out a driving error alarm signal, the signal is transmitted to the auxiliary safety controller 52 through a communication protocol or in another transmission mode. The auxiliary safety controller 52 generates a command according to the received safety-related signal and inputs it to the servo driver 91. This command instructs the servo driver to reduce the speed of the motor until the motor stops, for example.

On the other hand, the sensor of the servo driver can also send the driving error alarm signal to the main safety controller 7. The main safety controller 7 analyzes the alarm signal. If the alarm signal is determined to be a core safety signal, the main safety controller 7 sends a core safety instruction to the corresponding safety actuator, namely, servo driver 91 so that the servo driver 91 stops immediately, for example. If the alarm signal is determined to be a non-core safety signal, for example, a safety-related signal, the main safety controller 7 sends an instruction to the auxiliary safety controller 52, then the auxiliary safety controller 52 generates a command according to the received signal and inputs it into the servo driver 91. The command instructs the servo driver to reduce the speed of the motor until the motor stops, for example.

For example, when a component assigned as a core safety sensor 31 (for example, safety door switch) sends a door switch ON signal to the main safety controller 7, the main safety controller can directly send a shutdown instruction to an actuating device, for example, servo driver.

It should be understood that although the Description gives a description by embodiment, it does not mean that each embodiment contains only one independent technical solution. The description method in the Description is only for the sake of clarity. Those skilled in the art should consider the Description as an integral body. The technical solutions in all these embodiments can be combined properly to form other embodiments that those skilled in the art can understand.

The embodiments described previously are used only for illustrative purposes, but are not used to limit the scope of the present invention. All equivalent variations, modifications, or combinations made by any of those skilled in the art without departing from the conception and principle of the present invention should fall within the scope of protection of the present invention.

### Further Embodiments:

1. A safety control system (100) for an industrial robot, comprising:
   a first safety controller (7), which is connected to at least one core safety sensor (31) outputting a core safety signal and receives said core safety signal, and
   a second safety controller (52), which is connected to at least one safety-related sensor (32) outputting a safety-related signal and receives said safety-related signal,
   wherein said first safety controller (7) and said second safety controller (52) are respectively connected to a safety actuating system (9).
2. The safety control system (100) for an industrial robot as claimed in embodiment 1, wherein said first safety controller (7) is a safety relay.
3. The safety control system (100) for an industrial robot as claimed in embodiment 1, wherein each of said core safety sensors comprises two identical sensor elements and is connected to said first safety controller (7) through two channels.
4. The safety control system (100) for an industrial robot as claimed in any of embodiments 1 to 3, wherein said first safety controller (7) is connected to at least one said safety-related sensor (32) and receives said safety-related signal.
5. The safety control system (100) for an industrial robot as claimed in embodiment 4, wherein said first safety controller (7) communicates with said second safety controller (52).
6. The safety control system (100) for an industrial robot as claimed in embodiment 1, wherein
   said safety actuating system (9) comprises a first safety actuating device (91), wherein said first safety controller (7) and said second safety controller (52) are respectively connected to said first safety actuating device (91) for communication.
7. The safety control system (100) for an industrial robot as claimed in embodiment 6, wherein
   said safety actuating system (9) comprises a second safety actuating device (91) and/or a third safety actuating device (93), wherein said first safety controller (7) is connected to the second safety actuating device (91) and/or the third safety actuating device (93) for communication.
8. The safety control system (100) for an industrial robot as claimed in embodiment 1, wherein said second safety controller (52) is a part of a robot controller (5).
9. A robot system, wherein said robot system comprises the safety control system as claimed in any of embodiments 1 to 8.

## Claims

1. A safety control system (100) for an industrial robot, comprising:
a first safety controller (7), which is connected to at least one core safety sensor (31) outputting a core safety signal and receives said core safety signal, and
a second safety controller (52), which is connected to at least one safety-related sensor (32) outputting a safety-related signal and receives said safety-related signal,
wherein said first safety controller (7) and said second safety controller (52) are respectively connected to a safety actuating system (9).

2. The safety control system (100) for an industrial robot as claimed in claim 1, wherein said first safety controller (7) is a safety relay.

3. The safety control system (100) for an industrial robot as claimed in claim 1, wherein each of said core safety sensors comprises two identical sensor elements and is connected to said first safety controller (7) through two channels.

4. The safety control system (100) for an industrial robot as claimed in any of claims 1 to 3, wherein said first safety controller (7) is connected to at least one said safety-related sensor (32) and receives said safety-related signal.

5. The safety control system (100) for an industrial robot as claimed in claim 4, wherein said first safety controller (7) communicates with said second safety controller (52).

6. The safety control system (100) for an industrial robot as claimed in claim 1, wherein
said safety actuating system (9) comprises a first safety actuating device (91), wherein said first safety controller (7) and said second safety controller (52) are respectively connected to said first safety actuating device (91) for communication.

7. The safety control system (100) for an industrial robot as claimed in claim 6, wherein
said safety actuating system (9) comprises a second safety actuating device (91) and/or a third safety actuating device (93), wherein said first safety controller (7) is connected to the second safety actuating device (91) and/or the third safety actuating device (93) for communication.

8. The safety control system (100) for an industrial robot as claimed in claim 1, wherein said second safety controller (52) is a part of a robot controller (5).

9. A robot system, wherein said robot system comprises the safety control system as claimed in any of claims 1 to 8.
